**Europäisches Patentamt**

**European Patent Office**

**Office européen des brevets**

(19)

(11) Veröffentlichungsnummer: **0 018 656**
**B1**

(12) **EUROPÄISCHE PATENTSCHRIFT**

(45) Veröffentlichungstag der Patentschrift:
27.07.83

(51) Int. Cl.³: **G 01 G  21/28**, G 01 G  21/24

(21) Anmeldenummer: **80102406.8**

(22) Anmeldetag: **03.05.80**

(54) Waage zum Einsatz in explosionsgefährdeten Bereichen.

(30) Priorität: **08.05.79  DE 7913203 U**

(43) Veröffentlichungstag der Anmeldung:
**12.11.80 Patentblatt 80/23**

(45) Bekanntmachung des Hinweises auf die Patenterteilung:
**27.07.83 Patentblatt 83/30**

(84) Benannte Vertragsstaaten:
**CH DE FR GB LI**

(56) Entgegenhaltungen:
**CH-A-604 143**
**DE-A-2 214 418**
**DE-A-2 460 734**
**DE-B-1 084 046**
**FR-A-1 199 877**
**US-A-3 444 943**

(73) Patentinhaber: **Sartorius GmbH., Weender Landstrasse 94-108, D-3400 Göttingen (DE)**

(72) Erfinder: **Knothe, Erich, Hasenwinkel 4, D-3406 Bovenden 1 (DE)**
Erfinder: **Blawert, Dieter, Karl-Methe-Strasse 12, D-3400 Göttingen (DE)**

(74) Vertreter: **Köhler, Rudolf, c/o Sartorius GmbH Weender Landstrasse 94-108, D-3400 Göttingen (DE)**

BUNDESDRUCKEREI BERLIN

## Waage zum Einsatz in explosionsgefährdeten Bereichen

Die Erfindung betrifft eine Waage mit einem das Wägesystem umschließenden Gehäuse, mit einer elektrischen oder elektronischen Anzeigevorrichtung und einer das Wägegut aufnehmenden Waagschale, welche außerhalb des Gehäuses angeordnet, in vertikaler Richtung begrenzt bewegbar ist und sich auf dem Wägesystem abstützt.

Die heute gebräuchlichen elektro-mechanischen Waagen besitzen eine umfangreiche Elektrik und Elektronik, die zwar einerseits ein schnelles und komfortables Wägen des Wägegutes zulassen, andererseits aber die Gefahr in sich bergen, durch Funkenübersprung und Kurzschlüsse ein Zündmittel zu bilden, wenn die Waage in Räumen mit explosionsgefährdeter Atmosphäre zum Einsatz gelangt oder mit der Waage explosionsgefährdetes Wägegut gewogen werden soll. Bei hochempfindlichen Präzisionswaagen stützt sich die das Wägegut aufnehmende Waagschale auf dem Wägesystem ab, welches in einem umschließenden Gehäuse angeordnet ist. Der Waagschalenträger durchstößt dabei das Gehäuse berührungsfrei. Der dadurch gebildete Ringspalt ist lediglich durch eine Labyrinthdichtung abgedichtet, so daß der Waagschalenträger sich vertikal durch Anschläge begrenzt bewegen kann, ansonsten jedoch reibungsfrei durch das Gehäuse hindurchgeführt ist.

Dadurch ist es nicht möglich, den die Elektrik aufnehmenden Innenraum des Gehäuses gasdicht abzudichten, so daß im Gehäuseinnern dieselbe Atmosphäre herrscht wie außerhalb des Gehäuses.

Es ist zwar grundsätzlich möglich elektrische Bauteile kurzschlußsicher zu bauen, jedoch ist dies im Hinblick auf die umfangreiche Elektrik und Elektronik solcher Waagen zu bauaufwendig. Solche elektronischen Waagen konnten daher bisher nicht in explosionsgefährdeten Räumen eingesetzt werden. Die bisher üblichen und auch noch im Einsatz befindlichen mechanischen Wägeeinrichtungen haben in der Regel ebenfalls elektrische Bauteile z. B. eine Beleuchtungseinrichtung für die Anzeige. So ist bereits bekannt (DE-OS 1 800 688) einen Explosionsschutz für die Beleuchtungseinrichtung einer Waage, insbesondere für eine Skalen-Projektionsvorrichtung vorzusehen. Dabei ist die Lampe der Beleuchtungsvorrichtung in einem im Waagengehäuse angeordneten Schutzgehäuse untergebracht und an das Lichtnetz über einen die Spannung herabsetzenden, im Waagengehäuse angeordneten Streutransformator angeschlossen, der primärseitig durch einen im Waagengehäuse angeordneten Explosionsschutzschalter an- und abschaltbar ist.

Bei dieser Waage findet als elektrisches Bauteil lediglich eine Beleuchtungseinrichtung Anwendung, die in diesem Fall noch mit vertretbarem Aufwand einen Explosionsschutz erhalten kann. Sobald die elektrischen und elektronischen Bauteile an Zahl und Umfang ein bestimmtes Maß übersteigen, ist eine solche Maßnahme, wie sie durch den Stand der Technik vorgeschlagen ist, zu bauaufwendig. Die Bauteile würden im übrigen zu voluminös, so daß sie in ein normales Waagengehäuse, z. B. für Präzisions- und Feinwaagen, nicht mehr eingebaut werden konnten, sondern neben der Waage aufgestellt werden müßten. Dadurch würde der Arbeitsplatz eingeengt und der Wägekomfort beeinträchtigt. Es ist zwar bereits eine elektromechanische Waage bekannt (DE-A-2 214 418), bei der der gesamte Gehäuseinnenraum mit einem Silikonöl gefüllt ist, dessen Füllstand mit Hilfe eines Sichtglases und/oder Ölmeßstab kontrolliert werden kann. Das Silikonöl soll gleichzeitig die gesamte Mechanik gegen Korrosion schützen, wenn die Waage z. B. in der Fischindustrie eingesetzt und diese mit heißem Wasser bzw. mit Wasserdampf gesäubert werden muß. Auch bei dieser bekannten Waage durchsetzt der die Lastschale tragende Lastaufnehmer das Gehäuseoberteil berührungsfrei, so daß das Silikonöl auch einer Verdunstung unterliegt und auch nur an Ort und Stelle eingefüllt werden kann, da dieses während des Transportes der Waage aus dem Gehäuseraum auslaufen könnte. Nachteilig und lästig ist bei einer solchen Ausführung auch, daß bei Reparatur die auszuwechselnden Bauteile erst sorgfältig vom Ölfilm befreit werden müssen.

Der Erfindung liegt daher die Aufgabe zugrunde, eine elektro-mechanische oder eine elektronische Waage herkömmlicher Bauart mit einem Explosionsschutz zu versehen, ohne daß der diesen Waagen eigene Wägekomfort beeinträchtigt wird.

Diese Aufgabe wird erfindungsgemäß dadurch gelöst, daß eine handelsübliche Waage in einem druckfesten Gehäuse eingeschlossen ist, welches eine definierte Druckfestigkeit (40 bis 50 bar) gegen einen von innen ausgehenden definierten Explosionsdruck (10 bis 15 bar), daß die Waagschale außerhalb des druckfesten Gehäuses vorgesehen ist, welche sich auf einem Gestänge abstützt, wobei das Gestänge das druckfeste Gehäuse in einer eng umschließenden und relativ langen Durchbrechung berührungsfrei durchstößt, in vertikaler Richtung parallel geführt ist und sich auf dem Wägesystem abstützt, daß weiterhin im Bereich der Anzeigevorrichtung im druckfesten Gehäuse ein druckfestes Einblickfenster aus transparentem Werkstoff vorgesehen ist und daß die elektrischen Versorgungsleitungen explosionssicher in das druckfeste Gehäuse eingeführt sind.

Damit ist sichergestellt, daß einerseits der hohe Wägekomfort solcher Präzisionswaagen voll erhalten bleibt und handelsübliche Präzisionswaagen aus der Serie mit einem vertretbaren konstruktiven Aufwand explosionsgeschützt ausgebildet werden können und damit auch in explosionsgefährdeten Räumen zum Einsatz gelangen können. In gleicher Weise kann auch direkt explosionsgefährdetes Wägegut mit einer solchen Waage gewogen werden. Die explosionsgefährdete Atmosphäre steht zwar auch hier mit dem Innenraum des druckfesten Gehäuses und damit auch mit dem Innenraum der eigentlichen Waage in Verbindung, jedoch wird aufgrund des langen Weges, den die Explosionsfront von innen nach außen zurücklegen muß, die Entzündung der Atmosphäre außerhalb des druckfesten Gehäuses ausgeschlossen. Der Begriff definierter Explosionsdruck und der Begriff definierte Festigkeit des druckfesten Gehäuses ist durch behördliche Bauvorschrift festgelegt und beträgt z. B. für den vorliegenden Anwendungsfall 10—15 bar, wobei das Gehäuse bei einer Erstprüfung einem Explosionsdruck von 40—50 bar standhalten muß.

Mit besonderem Vorteil besitzt der Stößel eine eigene Parallelführung, die teilweise außerhalb und teilweise innerhalb des druckfesten Gehäuses vorgesehen ist, so daß auch die Bauhöhe der gesamten Einrichtung relativ niedrig gehalten werden kann. Die sich auf dem Wägesystem abstützenden und vertikal beweglichen Teile sind durch eine außerhalb des druckfesten Gehäuses einstellbare Totlastfeder in einer das Wägesystem nicht belastenden Position gehalten.

Vorteilhafte Weiterbildung sind in den übrigen Ansprüchen unter Schutz gestellt.

Der Erfindungsgedanke, der die verschiedensten Ausführungsmöglichkeiten zuläßt, ist in einem Ausführungsbeispiel anhand der beiliegenden Zeichnung näher erläutert. Dabei zeigt

Fig. 1 in einem schematischen Längsschnitt die explosionsgeschützte Waage,

Fig. 2 eine Variante zu Fig. 1 bezüglich der Stößel und Adapterausbildung und

Fig. 3 einen Detailpunkt des Sichtfensters.

Eine serienmäßige elektronische Präzisionswaage 1 der Anmelderin ist in einem umschließenden, druckfesten Gehäuse 3, 4 untergebracht, wobei dieses aus einem Deckelteil 3 und einem Bodenteil 4 besteht, welche umlaufende Flansche besitzen, die mit Hilfe einer Vielzahl von Schrauben 5 oder anderen Spannmitteln miteinander fest verbunden sind. Die Waage 1 hat in bekannter Weise eine Vielzahl von elektronischen Bauteilen und einen Transformator, welche über das elektrische Kabel 32 von außen gespeist werden, wobei das Kabel 32 kurzschluß- und fehlersicher ausgeführt und durch die Kabeldurchführung 31 in das druckfeste Gehäuse 3, 4 eingeführt ist. Das Wägesystem der Waage 1 kann beispielsweise nach dem Prinzip der elektromagnetischen Kraftkompensation arbeiten und endet mit seinem Lastaufnehmer 2 auf der Oberseite der Waage 1 und nimmt normalerweise eine Lastschale auf. Im vorliegenden Ausführungsbeispiel ist die Erfindung an einer oberschaligen Waage dargestellt, jedoch ist es möglich, das gleiche Prinzip für eine unterschalige Waage zu verwenden. In diesem Fall ist die nachfolgend beschriebene Parallelführung im Bodenteil 4 des druckfesten Gehäuses 3, 4 angeordnet. Auf dem Wägesystem 2 stützt sich über Kugeln 11 und Kugelpfannen 12 das aus Adapter 10 und Stößel 9 gebildete Gestänge für die eigentliche Waagschale 6 ab.

Der Stößel 9 durchsetzt berührungsfrei den Deckelteil 3 des druckfesten Gehäuses, wobei zwischen Gehäuseteil 3 und Stößel 9 ein Ringspalt von etwa 25 mm Länge und 0,2 mm Breite gebildet ist. Um den Stößel 9 im Ringspalt 20 konzentrisch in vertikaler Richtung führen zu können, ist der Stößel 9 mit Hilfe eines Oberlenkers 13 und eines Unterlenkers 14 parallel geführt, wobei Oberlenker 13 und Unterlenker 14 in bekannter Weise Gelenkstellen 33 aufweisen, die im Bereich der Einspannstelle am Stößel 9 und im Bereich der Einspannstellen der Festpunkte 16 des Deckelteils 3 vorgesehen sind. Die mögliche Vertikalbewegung der Lastschale 6 und des Stößels 9 ist durch Anschläge 8 begrenzt und beträgt wenige zehntel mm. Der Oberlenker 13 ist mit einer Schutzhaube 7 abgedeckt, die im Bereich des Stößels 9 in einem Kragen 18 endet und mit einem weiteren Kragen 18' des Stößels 9 eine Labyrinthdichtung bildet, mit der das Eindringen von Fremdkörpern in das Wägesystem verhindert wird.

Der Stößel 9 weist außerdem eine Konsole 19 auf, an welcher eine Totlastfeder 17 angreift, die andererseits an einem Galgen 34 des Gehäusedeckels 3 befestigt ist und mit deren Hilfe von außen die vertikal beweglichen Teile wie Stößel 9, Parallelführung 13, 14 und Waagschale 6 in einer das Wägesystem 2 nicht belastenden Position gehalten sind. Die Justierung kann jederzeit durch die außerhalb des druckfesten Gehäuses 3, 4 befindlichen Einstellmittel erfolgen, ohne daß eine zusätzliche Justierung der im druckfesten Gehäuse 3, 4 befindlichen Waage 1 erfolgen muß. Im Bereich der Anzeigevorrichtung 22 der Waage 1 ist im Deckelteil 3 ein Sichtfenster 23 vorgesehen, welches mit Hilfe einer Klarsichtscheibe 24 aus Panzerglas ebenfalls druckfest ausgebildet ist. Das Panzerglas 24 lagert dabei in einem umlaufenden Innenfalz 25, wobei als Dichtung und als Futter zwischen Innenfalz 25 und dem Panzerglas 24 ein Dichtrahmen 26 aus Blei und zwischen dem Panzerglas 24 und einem Klemmrahmen 27 ein Futterrahmen 29 aus Blei vorgesehen ist. Die Panzerglasscheibe 24 ist mit Hilfe von Schrauben 28 und des Klemmrahmens 27 im Innenfalz 25 eingespannt.

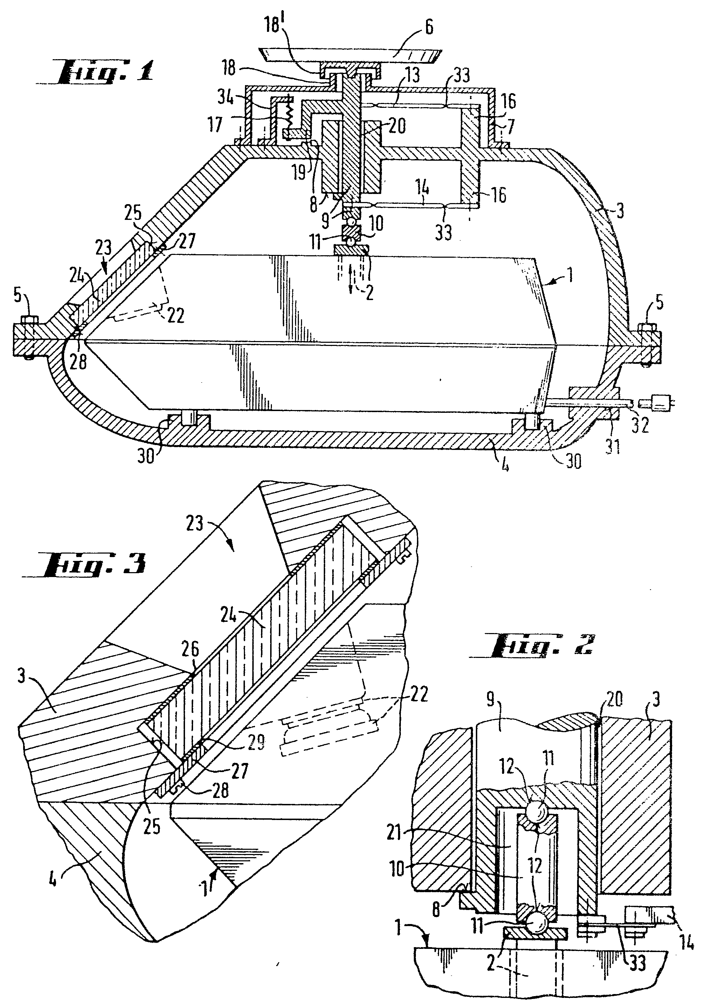

Fig. 2 zeigt eine Variante der in Fig. 1 bereits dargestellten Verbindung von Stößel 9, Adapter 10 und Wägesystem 2. Bei dieser Variante ist der Adapter 10 in einem zum Wägesystem 2 hin offenen Sackloch 21 gelagert und gleichermaßen über Kugeln 11 und Kugelpfannen 12 gelenkig mit dem Stößel 9 und dem Wägesystem 2 gekoppelt. Wie aus Fig. 2 ersichtlich ist, ist die Waage 1 im Bodenteil 4 mit Hilfe der Stützen 30 unverrückbar fixiert, so daß das druckfeste Gehäuse 3, 4 mit der innenstehenden Waage 1 auch unbedenklich transportiert werden kann, ohne daß die Gefahr besteht, daß die Waage 1 innerhalb des druckfesten Gehäuses 3, 4 hin und her rutscht. Da die Fixierung aber nur innerhalb eines gewissen Toleranzmaßes möglich ist, würde eine biegesteife Verbindung von Stößel 9 und Wägesystem 2 zu einer Beschädigung desselben oder der Parallelführung 13, 14 führen. Durch die gelenkige Lagerung und Zwischenschaltung des Adapters 10 mit Hilfe der Kugeln und Kugelpfannen hat dieser die Möglichkeit geringfügig quer zu seiner Vertikalachse um den jeweiligen Kugeldrehpunkt zu verschwenken, ohne daß dies schädliche Einflüsse auf das Wägesystem 2 hat. Das Sackloch 21 ist demgemäß im Durchmesser etwas größer gehalten als der Durchmesser des Adapters 10. Bei der Ausführungsform gemäß Fig. 1 kann der Adapter 10 in gleicher Weise geringfügig seitlich auswandern.

Die Gesamtbauhöhe des druckfesten Gehäuses 3, 4 läßt sich dadurch verringern, daß der Oberlenker 13 außerhalb des Deckelteiles 3 angeordnet ist und daß gemäß Fig. 2 der Adapter 10 in ein Sackloch 21 des Stößels 9 einbezogen ist.

Wie aus Fig. 1 erkennbar ist, besteht aufgrund der berührungsfreien Durchführung des Stößels 9 durch die Schutzhaube 7 und durch den Deckelteil 3 eine atmosphärische Verbindung zwischen dem Gehäuseinnenraum und dem Außenraum. Kommt es tatsächlich zu einer Erwärmung der elektrischen Bauteile in der Waage 1 bis zu einer kritischen Entzündungstemperatur oder tritt zwischen den elektrischen Bauteilen ein Funkenüberschlag oder ein Kurzschluß ein, so kann die explosionsgefährdete Atmosphäre im druckfesten Gehäuse 3, 4 zur Explosion gelangen, was möglicherweise zu einer Zerstörung der Waage 1 führen kann aber nicht dazu führt, daß die Explosionsfront nach außen dringt und damit die übrige explosionsgefährdete Atmosphäre entzündet. Durch den relativ engen und langen Ringspalt 20 sind die Explosionsgase, ehe sie nach außen gelangen, soweit abgekühlt, daß sie unterhalb der Entzündungstemperatur liegen.

Vorzugsweise ist die innere Umrißform des druckfesten Gehäuses 3, 4 der einer Hohlkugel oder einer länglichen Mulde angeglichen, um eine günstige Druckverteilung zu gewährleisten. In dem verbliebenden Zwischenraum oberhalb bzw. unterhalb der Waage 1 und den beiden Gehäuseschalen 3 und 4 kann zusätzliche Elektronik explosionssicher untergebracht werden z. B. Koppelgeräte.

Höherlastige Waagen sind zumeist als sogenannte Brückenwaagen ausgebildet. Dabei stützt sich eine rechteckige Lastschale an den vier Eckpunkten auf einer Brücke des Wägesystem ab (z. B. GB-PS 1 369 035). Die in Fig. 1 und 2 dargestellte Parallelführung kann auch für solche Brückenwaagen Verwendung finden. Der Adapter 10 kann dabei entweder in ein biegesteifes Verteilerkreuz übergehen, dessen Enden sich auf der Brücke des Wägesystems abstützen oder jeder Eckpunkt der Brücke wird durch einen separaten Stößel mit Parallelführung belastet, welcher analog zu Fig. 1 durch das Gehäuse 3, 4 hindurchgeführt ist. Die außenliegende Lastschale ist der Lastschale der Brückenwaage angepaßt und stützt sich entweder über ein Verteilerkreuz auf dem zentralen Stößel oder an den vier Eckpunkten auf den vier Stößeln mit Parallelführung ab.

**Patentansprüche**

1. Waage mit einem das Wägesystem umschließenden Gehäuse, mit einer elektrischen oder elektronischen Anzeigevorrichtung und einer das Wägegut aufnehmenden Waagschale, welche außerhalb des Gehäuses angeordnet, in vertikaler Richtung begrenzt bewegbar ist und sich auf dem Wägesystem abstützt, dadurch gekennzeichnet, daß die Waage (1) in einem druckfesten Gehäuse (3, 4) eingeschlossen ist, welches eine definierte Druckfestigkeit gegen einen von innen ausgehenden definierten Explosionsdruck besitzt, daß die Waagschale (6) außerhalb des druckfesten Gehäuses (3, 4) vorgesehen ist und sich auf einem Gestänge (9, 10) abstützt, welches das druckfeste Gehäuse (3, 4) in einer eng umschließenden und relativ langen Durchbrechung (20) berührungsfrei durchstößt, in vertikaler Richtung parallel geführt ist und sich auf dem Wägesystem (2) abstützt, daß im Bereich der Anzeigevorrichtung (22) im druckfesten Gehäuse (3, 4) ein druckfestes Einblickfenster (23) aus transparentem Werkstoff vorgesehen ist und daß die elektrischen Versorgungs- und Datenleitungen (32) explosionssicher in das druckfeste Gehäuse (3, 4) eingeführt sind.

2. Waage nach Anspruch 1, dadurch gekennzeichnet, daß das Gestänge (9, 10) das Koppelglied einer aus Ober- und Unterlenker (13, 14) bestehenden Parallelführung ist.

3. Waage nach Anspruch 2, dadurch gekennzeichnet, daß die Parallelführung (13, 14) für das Gestänge (9, 10) teilweise im Innenraum und teilweise außerhalb des druckfesten Gehäuses (3, 4) vorgesehen ist.

4. Waage nach einem der Ansprüche 1 bis 3, dadurch gekennzeichnet, daß das druckfeste Gehäuse (3, 4) aus zwei Halbschalen gebildet ist, die durch lösbare Verbindungsmittel (5) miteinander verbunden sind.

5. Waage nach Anspruch 4, dadurch gekennzeichnet, daß die beiden Halbschalen aus einem Bodenteil (4) und einem Deckelteil (3) gebildet sind.

6. Waage nach einem der Ansprüche 4 oder 5, dadurch gekennzeichnet, daß die beiden Halbschalen (3, 4) als muldenförmige, abgerundete Hohlform ausgebildet sind.

7. Waage nach einem der Ansprüche 1 bis 6, dadurch gekennzeichnet, daß das Gestänge (9, 10) aus einem Stößel (9) und einem diesen mit dem Wägesystem verbindenden Adapter (10) gebildet und der Adapter (10) beidseitig gelenkig abgestützt und quer zu seiner Vertikalachse begrenzt schwenkbar am Stößel (9) gelagert ist.

8. Waage nach Anspruch 7, dadurch gekennzeichnet, daß der Adapter (10) an seinen Enden kugelförmig ausgebildet und die Enden aufnehmenden Gegenlager am Stößel (9) und am Wägesystem pfannenartig ausgebildet sind.

9. Waage nach einem der Ansprüche 7 oder 8, dadurch gekennzeichnet, daß der Adapter (10) in einem in Richtung des Wägesystems (2) offenen Sackloch (21) des Stößels (9) gelagert ist und das Sackloch (21) im Durchmesser größer gehalten ist als der Durchmesser des Adapters (10).

10. Waage nach einem der Ansprüche 2 bis 9, dadurch gekennzeichnet, daß der Oberlenker (13) der Parallelführung für den Stößel (9) außerhalb und der Unterlenker (14) innerhalb des druckfesten Gehäuses (3, 4) angeordnet und einerseits mit dem als Koppelglied wirkenden Stößel (9) und andererseits mit Festpunkten (16) des druckfesten Gehäuses (3, 4) gelenkig verbunden sind.

11. Waage nach einem der Ansprüche 1 bis 10, dadurch gekennzeichnet, daß der transparente Werkstoff (24) des Einblickfensters (23) umlaufend in einem Innenfalz (25) des druckfesten Gehäuses (3, 4) abgestützt und zwischen dem transparenten Werkstoff (24) und dem Falz (25) ein umlaufender Dichtungsrahmen (25) aus Blei angeordnet ist.

12. Waage nach einem der Ansprüche 1 bis 11, dadurch gekennzeichnet, daß die sich auf dem Wägesystem (20) abstützenden und vertikal beweglichen Teile wie Stößel (9), Adapter (10), Parallelführung (13, 14) und äußere Waagschale (6) durch eine außerhalb des druckfesten Gehäuses (3, 4) einstellbare Totlastfeder (17) in einer das Wägesystem (2) nicht belastenden Position gehalten sind.

13. Waage nach einem der Ansprüche 1 bis 12, dadurch gekennzeichnet, daß die Durchbrechung im druckfesten Gehäuse gleich oder länger als 25 mm ist und der Führungsspalt zwischen Durchbrechung und Gestänge gleich oder kleiner als 0,1 mm umlaufend ist.

## Claims

1. Weighing machine with a housing enclosing the weighing system, with an electrical or electronic indicating device and a weighing pan which receives the stock to be weighed is arranged externally of the housing, is limitedly movable in vertical direction and bears on the weighing system, characterised thereby, that the weighing machine (1) is enclosed in a pressure-resistant housing (3, 4) which possesses a defined pressure strength against a defined explosive pressure emanating from inside, that the weighing pan (6) is provided externally of the pressure-resistant housing (3, 4) and bears on a linkage (9, 10), which penetrates the pressureresistant housing (3, 4) free of contact in a narrowly enclosing and relatively long passage (20), is guided parallelly in vertical direction and bears on the weighing system (2), that a pressureresistant viewing window (23) of transparent material is provided in the pressure-resistant housing (3, 4) in the region of the indicating device (22) and that the electrical supply and data lines (32) are introduced explosion-proof into the pressureresistant housing (3, 4).

2. Weighing machine according to claim 1, characterised thereby, that the linkage (9, 10) is the coupling member of a parallel guide consisting of upper and lower guide rods (13, 14).

3. Weighing machine according to claim 2, characterised thereby, that the parallel guide (13, 14) for the linkage (9, 10) is provided partially in the interior space and partially externally of the pressure-resistant housing (3, 4).

4. Weighing machine according to one of the claims 1 to 3, characterised thereby, that the pressure-resistant housing (3, 4) is formed of two half shells which are connected each with the other through detachable connecting means (5).

5. Weighing machine according to claim 4, characterised thereby, that both the half shells are formed of a bottom part (4) and a cover part (3).

6. Weighing machine according to one of the claims 4 or 5, characterised thereby, that both the half shells (3, 4) are constructed as trough-shaped, rounded hollow cast or moulded parts.

7. Weighing machine according to one of the claims 1 to 6, characterised thereby, that the linkage (9, 10) is formed of a push-rod (9) and an adaptor (10) connecting this with the weighing system and the adaptor (10) is articulatedly supported at both sides and borne, limitedly pivotable transversely to its vertical axis, at the push-rod (9).

8. Weighing machine according to claim 7, characterised thereby, that the adaptor (10) is spherically shaped at its ends and the counter-bearings receiving the ends at the push-rod (9) and at the weighing system are shaped in the manner of pans.

9. Weighing machine according to one of the claims 7 or 8, characterised thereby, that the adaptor (10) is borne in a blind hole (21), open in direction of the weighing system (2), of the push-rod (9) and the blind hole (21) is kept larger in diameter than the diameter of the adaptor (10).

10. Weighing machine according to one of the claims 2 to 9, characterised thereby, that the upper guide rod (13) of the parallel guide for the push-rod (9) is arranged externally of and the lower guide rod (14) internally of the pressure-resistant housing (3, 4) and are articulatedly connected on the one hand with the push-rod (9) acting as coupling member and on the other hand with fixed points (16) of the pressure-resistant housing (3, 4).

11. Weighing machine according to one of the claims 1 to 10, characterised thereby, that the transparent material (24) of the viewing window (23) is encirclingly supported in an inward rabbet (25) of the pressure-resistant housing (3, 4) and an encircling sealing frame (25) of lead is arranged between the transparent material (24) and the rabbet (25).

12. Weighing machine according to one of the claims 1 to 11, characterised thereby, that the vertically movable parts bearing on the weighing system (20), such as push-rod (9), adaptor (10), parallel guide (13, 14) and outer weighing pan (6) are held in a position not loading the weighing system (2) through a dead-load spring (17) settable externally of the pressure-resistant housing (3, 4).

13. Weighing machine according to one of the claims 1 to 12, characterised thereby, that the passage in the pressure-resistant housing is equal to or longer than 25 millimetres and the guide gap between passage and linkage is equal to or smaller than 0.1 millimetre all round.

**Revendications**

1. Balance équipée d'un boîtier qui entoure le système de pesage, d'un dispositif d'affichage électrique ou électronique et d'un plateau de charge qui, recevant la matière à peser, est disposé à l'extérieur du boîtier, peut accomplir des mouvements verticaux limités et prend appui sur le système de pesage, balance caractérisée par le fait qu'elle (1) est enfermée dans un boîtier (3, 4) qui résiste à la pression et qui présente une résistance déterminée à la pression à l'encontre d'une pression d'explosion déterminée engendrée de l'intérieur; par le fait que le plateau de charge (6) est prévu à l'extérieur de boîtier (3, 4) résistant à la pression et prend appui sur un tringlage (9, 10) qui, traversant ledit boîtier (3, 4) sans aucun contact dans un évidement (20) relativement allongé qui l'entoure intimement, est guidé parallèlement dans le sens vertical et prend appui sur le système de pesage (2); par le fait que, au voisinage du dispositif d'affichage (22) dans le boîtier (3, 4) résistant à la pression, il est prévu une fenêtre d'observation (23) qui résiste à la pression et est en une matière transparente; et par le fait que les conducteurs (32) électriques d'alimentation et de données sont insérés dans le boîtier (3, 4) résistant à la pression en étant protégés des explosions.

2. Balance selon la revendication 1, caractérisée par le fait que le tringlage (9, 10) est l'orange d'accouplement d'un dispositif de guidage parallèle comprenant des bras articulés supérieur et inférieur (13, 14).

3. Balance selon la revendication 2, caractérisée par le fait que le dispositif de guidage parallèle (13, 14) du tringlage (9, 10) est prévu partiellement dans l'espace interne et partiellement à l'extérieur du boîtier (3, 4) résistant à la pression.

4. Balance selon l'une des revendications 1 à 3, caractérisée par le fait que le boîtier (3, 4) résistant à la pression est formé par deux demi-coquilles qui sont reliées l'une à l'autre par des moyens amovibles de liaison (5).

5. Balance selon la revendication 4, caractérisée par le fait que les deux demi-coquilles sont formées par un fond (4) et un couvercle (3).

6. Balance selon l'une des revendications 4 ou 5, caractérisée par le fait que les deux demi-coquilles (3, 4) sont creuses, en forme de cuvettes et arrondies.

7. Balance selon l'une des revendications 1 à 6, caractérisée par le fait que le tringlage (9, 10) est formé par un coulisseau (9) et par un adaptateur (10) qui relie ce dernier au système de pesage, ledit adaptateur (10) étant supporté de manière articulée de part et d'autre et pouvant effectuer des pivotements limités, transversalement à son axe vertical, sur le coulisseau (9).

8. Balance selon la revendication 7, caractérisée par le fait qu'à ses extrémités l'adaptateur (10) a la forme de billes ou sphères et les contre-paliers recevant ces extrémités sur le coulisseau (9) et sur le système de pesage sont en forme de cuvettes.

9. Balance selon l'une des revendications 7 ou 8, caractérisée par le fait que l'adaptateur (10) est placé dans un trou borgne (21) du coulisseau (9) ouvert en direction du système de pesage (2), le diamètre de ce trou borgne (21) étant maintenu plus grand que le diamètre dudit adaptateur (10).

10. Balance selon l'une des revendications 2 à 9, caractérisée par le fait que le bras articulé supérieur (13) du dispositif de guidage parallèle du coulisseau (9) et le bras articulé inférieur (14) se trouvent respectivement à l'extérieur et à l'intérieur du boîtier (3, 4) résistant à la pression et sont reliés, de manière articulée, d'une part au coulisseau (9) agissant comme un organe d'accouplement et, d'autre part, à des points fixes (16) dudit boîtier (3, 4) résistant à la pression.

11. Balance selon l'une des revendications 1 à 10, caractérisée par le fait que la matière transparente (24) de la fenêtre d'observation (23) prend appui périphériquement dans une creusure interne (25) du boîtier (3, 4) résistant à la pression, un cadre périphérique d'étanchéité (25) en plomb étant intercalé entre cette matière transparente (24) et ladite creusure (25).

12. Balance selon l'une des revendications 1 à 11, caractérisée par le fait que les parties mobiles verticalement et prenant appui sur le système de pesage (20), telles que le coulisseau (9), l'adaptateur (10), le dispositif de guidage parallèle (13, 14) et le plateau de charge (6) situé à l'extérieur, sont maintenues, par un ressort de tarage (17) réglable à l'extérieur du boîtier (3, 4) résistant à la pression, dans une position dans laquelle elles n'imposent aucune contrainte audit système de pesage (2).

13. Balance selon l'une des revendications 1 à 12, caractérisée par le fait que l'évidement dans le boîtier résistant à la pression est d'une longueur égale ou supérieure à 25 mm, l'intervalle de guidage entre cet évidement et le tringlage étant égal ou inférieur à 0,1 mm dans le sens périphérique.

*Fig. 1*

*Fig. 3*

*Fig. 2*